# EUROPEAN PATENT APPLICATION

(11) **EP 2 540 599 A1**
(43) Date of publication of application: **02.01.2013**
(21) Application number: 11171698.1
(22) Date of filing: 28.06.2011
(51) Int. Cl.: B62J 1/16, B62J 1/20, B62J 1/26

(54) **Inflatable upholstery for child seat**

(71) Applicant: HAMAX AS, 1526 Moss (NO)
(72) Inventor: Torgersen, Hans Kristian, 3535 Kroderen (NO)
(74) Representative: Popp, Eugen

(57) **Abstract**

A removeable inflatable upholstery (10) for a child seat (1) is disclosed, in particular a child seat (1) for a bicycle comprising a shell-like support structure which further comprises:
- a seat portion (2),
- a back rest (3),
- preferably including one or more lateral armrests (4),
and/or
- one or more lateral shoulder supports,
and/or
- one or more lateral head supports (5).

The inflatable upholstery (10) is a separate part being attachable to the support structure or parts thereof at the user's discretion.

## Description

### BACKGROUND OF THE INVENTION

In order to carry smaller children on a bike, it is typical to provide some form of child seat which will attach to the adult's bike. The location of a child seat could vary from a position over the front wheel, between the cyclist and the handlebars, or more commonly over the back wheel on some form of carrier. Child seat designs are increasing in complexity and safety, and provide the child with a comfortable and safe location during a cycle ride.

As child seats become more elaborate, complex and safe, the costs of such seats is also increased. Unfortunately, the costs of certain child seats can be prohibitively expensive, thus meaning that a cyclist may have to choose a cheaper or less comfortable seat to accommodate a child. Additionally, children have a habit of growing in size, thus meaning that a child seat which may be suitable for housing a child aged 2 years, will be too small for a child aged 4 to 6 years. It is not always cost effective for a parent to purchase multiple child seats, or certainly not to purchase multiple top of the range expensive child seats for only a limited useable lifetime.

Most child seats are provided with some basic level of upholstery to improve the comfort for a child. It is not always possible, however to provide a particularly comfortable upholstery for a child in a cheaper child seat, thus meaning that different ranges of child seats must be manufactured, wherein the thickness and quality of the upholstery varies across the range. From a manufacturing standpoint, this is undesirable, as it would be much more practical to produce a single model for the whole range.

The problems associated with multiple thicknesses of upholstery in child seats, not only for consideration of cost of the child seat but also on the basis of the size of the child, is a problem addressed by the disclosure of the present application.

### SUMMARY OF THE INVENTION

The above-disclosed problems are addressed by means of the inflatable upholstery for the removable attachment to a child seat in accordance with independent claim 1. The dependent claims provide further preferred embodiments of the invention.

In particular, the present disclosure relates to a removable inflatable upholstery for attachment in a detachable manner to a child seat, such that the inflatable upholstery could be used to reduce the size of a larger child seat to allow a smaller child to fit therein. Additionally, the removable inflatable upholstery could be used as a luxury item for parents to purchase in addition to a standard child seat. In particular, it is expected that the child seat would be for a bicycle, and will likely provide an appropriate shell of a support structure. The support structure will typically comprise one or more of a seat portion, a backrest, armrests as well as shoulder supports and a heat support region. The inflatable upholstery will be provided as a separate portion which can be appropriately attached in a removable manner to the child seat.

It is preferred that the inflatable upholstery is provided by means of an impermeable plastic material. Further preferably, the inflatable upholstery is made from two or more sheets of the impermeable plastic material, wherein the sheets are appropriately welded together to form one or more inflatable volumes in the inflatable upholstery. The welds can be chosen to not only provide the appropriate three-dimensional structure to the inflatable upholstery after inflation, but will also provide appropriate paths for airflow around the back of a child sitting in the seat.

The use of multiple inflatable volumes allows for some tailoring of the eventual structure of the inflatable upholstery, and can also improve the overall functionality of the inflatable upholstery cushion. Such separately inflatable volumes can be provided by means of complete welds between the plastic materials forming the separate inflatable regions, wherein each region is provided by means of a valve in order to inflate. The air valves are preferably air valves which can be used and inflated from the mouth of a user, but could also be provided by means of a valve which can be used with an appropriate pump.

It is preferably possible to provide the multiple inflatable cushions in a parallel manner, such that regions of upholstery could be made appropriately thicker, For example, the inflatable upholstery could be provided with side pockets for the inflatable volumes, such that multiple inflatable volumes could be pumped up to make the width of the seating area narrower or wider to accommodate smaller and larger children. Additionally, it is possible to provide secondary inflatable volumes in a head region of the inflatable upholstery, wherein these inflatable volumes could interact and firmly hold the helmet of a child in the child seat. This would clearly improve the safety for the child, as the heat portion and neck of the child would be held in a firm manner within the inflatable upholstery.

In order to removably attach the inflatable upholstery to the child seat, the child seat and inflatable upholstery could be provided with one side of a Velcro-type fastener, or could be provided with one side of a press-stud. Preferred fixation mechanisms, however, do not need features to be attached to the child seat, rather the inflatable upholstery is appropriately structured to interact with the general design of the child seat. A first fixing mechanism could be by means of a cleat or tab which fits through from one side of the child seat to the outer side of the child seat, and which then fixes over a lip or projection on the outer side of the child seat. Further mechanisms preferably include the use of rigid strips which will appropriately fit into slots of the child seat, such that the rigid strips can be frictionally engaged in these elongated slots on the child seat so as to generally hold portions of the inflatable upholstery to the child seat. Finally, another preferred fixation mechanism is to provide a portion of the inflatable upholstery with a bent strip. The bent strip can be provided within a pocket, or multiple pockets, of a portion of the edge of the inflatable upholstery, and can be used to fix the inflatable upholstery over a lip provided at the edge of the child seat. The most likely location for this third type of fixation mechanism is around the curved upper outer edge of the head portion of the child seat.

Finally, the present disclosure relates to an appropriately structured child seat which comprises the relative slots, lugs, tabs and gaps to allow the abovementioned inflatable upholstery to interact therewith.

### DESCRIPTION OF THE FIGURES

- Fig. 1:: Shows the inflatable upholstery according to the current disclosure.
- Fig. 2:: This figure shows the inflatable upholstery of Fig. 1 as attached to a child seat.
- Fig. 3:: A plan view of one example of the upholstery shown in Fig. 1.
- Fig. 4:: This figure shows the type 1 fixing concept for the inflatable upholstery.
- Fig, 5:: Projection and cross sectional view of the type 2 fitting arrangement.
- Fig. 6:: Projection and cross sectional view of the type 3 fixing of the inflatable upholstery.

### DETAILED DESCRIPTION

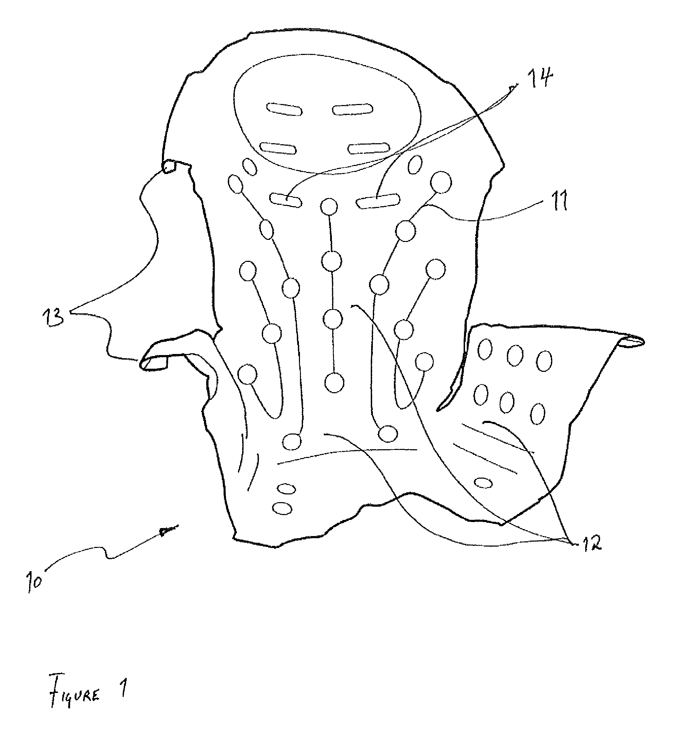

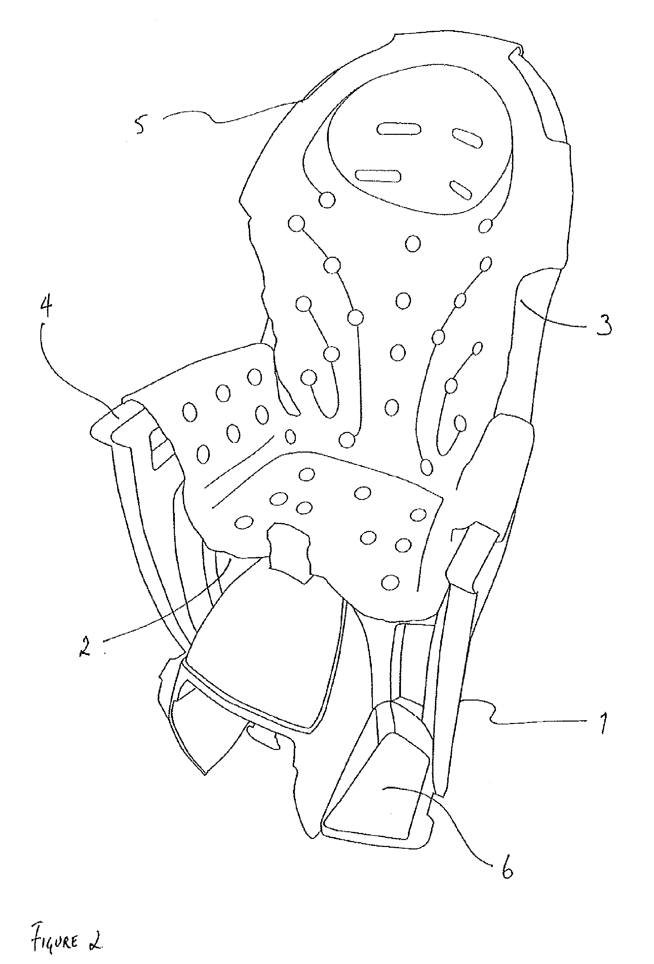

Fig. 1 shows a depiction of one example of an inflatable upholstery 10 or inflatable cushion 10 of the present disclosure. In particular, the inflatable upholstery 10 is structured such that it can be removably attached to a child seat 1 in order to provide increased comfort and safety for a child using a child seat 1. Fig. 2 shows the inflatable upholstery 10 of Fig. 1 as attached to a child seat 1, clearly showing the interaction between the inflatable upholstery 10 and the child seat 1.

The child seat 1 is, in most aspects, not intended to be a limiting aspect of the present disclosure. In particular, the child seat 1 need not have all of the features as described, which will either not affect the design of the upholstery 10, or in certain cases may change the design of the inflatable upholstery 10. The following disclosure relating to both the child seat 1 and inflatable upholstery 10 relates to the most comprehensive design of the inflatable upholstery 10 and associated child seat 1, but it is to be understood that depending upon the child seat 1, the design of the inflatable upholstery 10 would or could be amended.

As can be seen from Fig. 2, the child seat 1 is provided with a seat portion 2, a backrest 3, lateral armrests 4 as well as a heat support 5. It is typical for modern child seats 1 to be provided with foot wells 6 which are intended to secure the feet and lower legs of a child in the child seat 1. The design shown in Fig. 2 incorporates the armrests 4, with associated portions of the inflatable upholstery 10 to interact with these armrests 4. Clearly, if the child seat 1 did not comprise the armrests 4, the upholstery 10 need not be provided with structures which would interact with the armrests 4. Likewise, it is common for child seats 1 to have a head support 5 - obviously if the child seat 1 was not provided with a head support 5, the inflatable upholstery 10 would also not comprise this structure.

The inflatable upholstery 10 as shown in Fig. 1 is generally structured from one or more impermeable plastic material sheets. Preferably, the edges of the inflatable cushion 10 are provided by means of welding together portions of the plastic sheet material, such that an airtight seal is made thus defining inflatable volumes 12. A preferred design is to use two sheets of impermeable plastic material, such that the edges of the two sheets can be welded together to create the inflatable cushion 10. Obviously, however, a single sheet could be used and folded over to give the same structure.

The inflatable upholstery in Fig. 1 is generally provided with a single inflatable volume 12. The inflatable volume is accessed by means of a valve, not shown in the figures, wherein the valve is preferably a valve operated without the means of a pump. That is, a valve well known in the art which can be used by the user to inflate the upholstery 10 by means of the user's mouth. Clearly, other valves are conceivable dependent upon the end requirements of the upholstery 10. In the inflatable upholstery 10 the valve provides access to the interior inflatable volume or volumes 12 to allow the user to inflate the upholstery 10 prior to insertion into the child seat 1.

Figs. 1 to 3 clearly show a weld pattern 11 between the sheets making up the inflatable upholstery 10. The weld pattern 11 are section of the inflatable upholstery 10 which are jointed together to create inflatable cushion type volumes 12 between the welds 11. This sort of structure is well known in the art, and allows for an inflatable upholstery 10 to be structured such that it will fit within the child seat 1 after the upholstery 10 has been appropriately inflated. Clearly, by positioning the weld pattern 11 accordingly, inflating the inflatable upholstery 10 will lead to the upholstery 10 adopting a three-dimensional structure, such that this can then be appropriately fitted within the child seat 1.

The embodiment shown in Figs. 1 to 3 is that of a single inflatable volume 12. Obviously, different sections of the inflatable upholstery 10 could be provided in an independently inflatable manner. Provision of multiple valves into each of the inflatable volumes 12 would allow for different portions of the inflatable upholstery 10 to be inflated to different sizes or internal air pressures, as desired by the user. Further, the use of multiple inflatable volumes 12 allows for a better structure to the resultant inflatable cushion 10.

The weld pattern 11 shown in the figures is one example only, and is not intended to be limiting. As discussed, the weld pattern is useful for leading to a general three-dimensional structure to the inflatable upholstery 10 after it has been inflated. Further, the weld patterns 11 can be used for defining air pathways or passageways behind the child when sitting in the child seat 1, in order to improve airflow and the comfort for the child. Finally, different weld patterns 11 could be conceived to provide different levels of support to different portions of the child in the seat.

Clearly, child seats 1 are provided with some form of harness, not shown in the figures, for holding the child safely within the child seat 1. As can be seen in Fig. 1, the inflatable upholstery 10 is provided with gaps 14 which will appropriately align with the straps making up the harness. In order to affix the inflatable upholstery 10 into the child seat 1, the straps of the harness are passed through the slots 14 thus ensuring that the inflatable upholstery 10 sits snugly within the child seat 1, but does not affect the safety of the child.

The attachment of the inflatable upholstery 10 to the child seat 1 is by means of fixing means 13. The fixing means 13 shown in the figures fall into three categories, although it is to be understood that these are by way of example only. For example, the inflatable upholstery 10 could be attached to the child seat 1 by means of a Velcro-type fastener, or by means of press-studs provided on the child seat 1 and the inflatable upholstery 10. The concept of the disclosure is that the inflatable upholstery 10 can be attached and detached from the child seat 1, as required, such that the child seat 1 could be used by children of different sizes.

In order to accommodate children of different sizes, it is also possible to provide the inflatable upholstery 10 with multiple inflatable volumes 12 in a thickness direction of the inflatable upholstery 10. For example, in the region of the seat portion 2 and lateral armrests 4, it is conceivable that a second inflatable volume 12 could be provided such that the gap between the armrests 4 of the child seat 1 could be reduced in order to more tightly hold a small child utilising the child seat 1, This discussion is not shown in any of the figures.

Another aspect which could be incorporated into the inflatable upholstery 10, is the provision of inflatable volumes 12 which interact with a helmet provided on the child in the child seat 1. By providing either an original structure to the inflatable cushion 10 such that the inflatable volume 12 in the region of the child's head will snugly fit around the helmet of the child, the safety of the child can be improved. Also, it could possible to provide a secondary inflatable volume 12 in the region of the child's head such that this could be inflated in addition to the normal inflation of the inflated upholstery, and could hold the helmet of a child in a snug and tight manner, Again, by providing a second independently inflatable volume 12 in the region of the helmet of the child, the child's head could be selectively held in a safer and more shielded manner.

In addition to the above described fastening mechanisms utilising Velcro or press-studs between the inflatable upholstery 10 and the child seat 1, it is possible to structure the edge regions of the inflatable cushion 10 such that the fixing means 13 will interact with the child seat 1. In this mechanism, it is not necessary to provide additional structures on the child seat for attachment of the inflatable upholstery 10, which is advantageous as when the child seat 1 is to be used without the inflatable upholstery 10, the lack of changes to the child seat 1 means that there will be no interference with the child in the child seat 1. Such attachment mechanisms are detailed below:

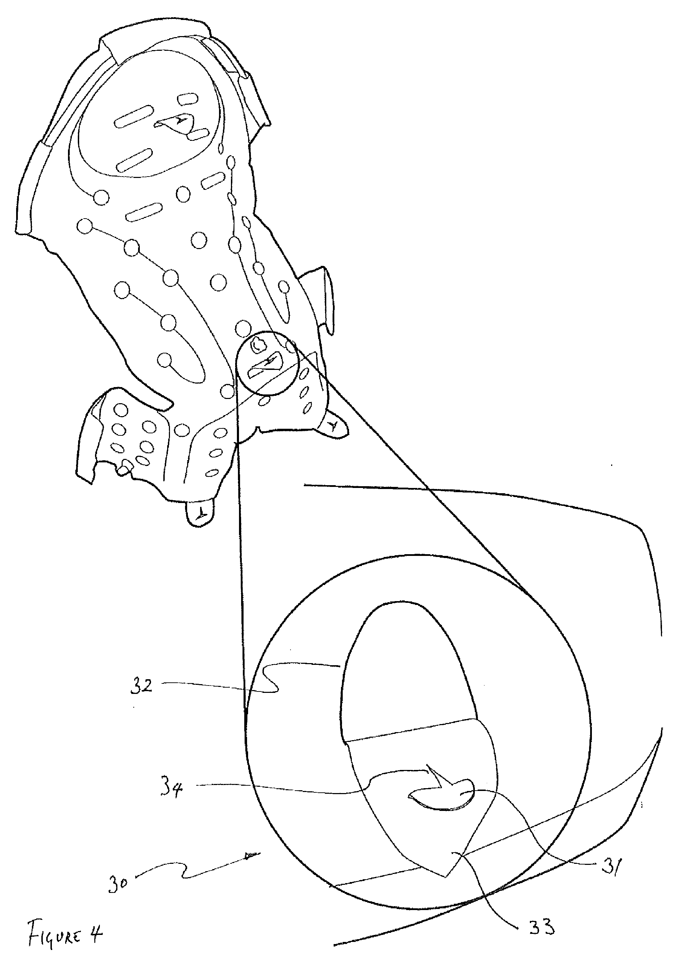

Fig. 4 shows a first, Type Eye, fixing mechanism, which is in the form of a type 1, or tab fastener 30. The tab fastener 30 is structured as a tab 33 extending from a portion of the inflatable upholstery 10. In Fig. 4, the tabs 33 are provided at portions on the rear side of the inflatable upholstery 10, as well as at certain portions of the edge of the inflatable upholstery 10. It will be understood by the person skilled in the art, that the specific positioning of the tabs 33 is limited, and is chosen dependent upon the final structure of the inflatable upholstery 10, and the precise number of fixing points required between the inflatable upholstery 10 and the child seat 1.

As seen in the close-up portion of Fig. 4, the tab 33 is provided with a slot 34 therein. The slot 34 of the tab 33 is intended to fit over a lip or protrusion 31 provided on the seat 1. In particular, the seat 1 is structured to provide an appropriate gap 32 from one side of the child seat 31 to the other, wherein the lip or protrusion 31 is provided next to the gap 32 such that the tab 33 can be slotted through the gap 32 and the slot 34 can be positioned over the lip or protrusion on the seat 31. In use, the inflatable upholstery 10 would be positioned within the child seat 1, and the tabs 33 would be passed from the interior of the child seat to the exterior of the child seat 1 via the gaps 32. Once the tab 33 is on the outer side of the child seat 1, the slot 34 is positioned over the lip or protrusion 31 on the seat 1, thus holding the inflatable upholstery 10 to the child seat 1. It should be noted at this stage, that the inflatable upholstery 10 need not be fitted to the child seat 1 with any overly tight fixing means. It is to be remembered that the child within the child seat 1 will be firmly held into the child seat 1 by means of the normal harness, and the purpose of the fixing means 13 is to ensure that the inflatable upholstery 10 is generally fitted, or form-fitted, to the child seat 1, but that the inflatable upholstery 10 will be properly held to the child seat 1 by the child and the harness holding the child to the child seat 1. As stated, the purpose of the fixing means 13 is to ensure that the inflatable upholstery 10 is generally form-fit to the interior of the child seat 1, but is not necessarily held there so firmly that no small relative movement between the inflatable upholstery 10 and the child seat 1 cannot be entertained.

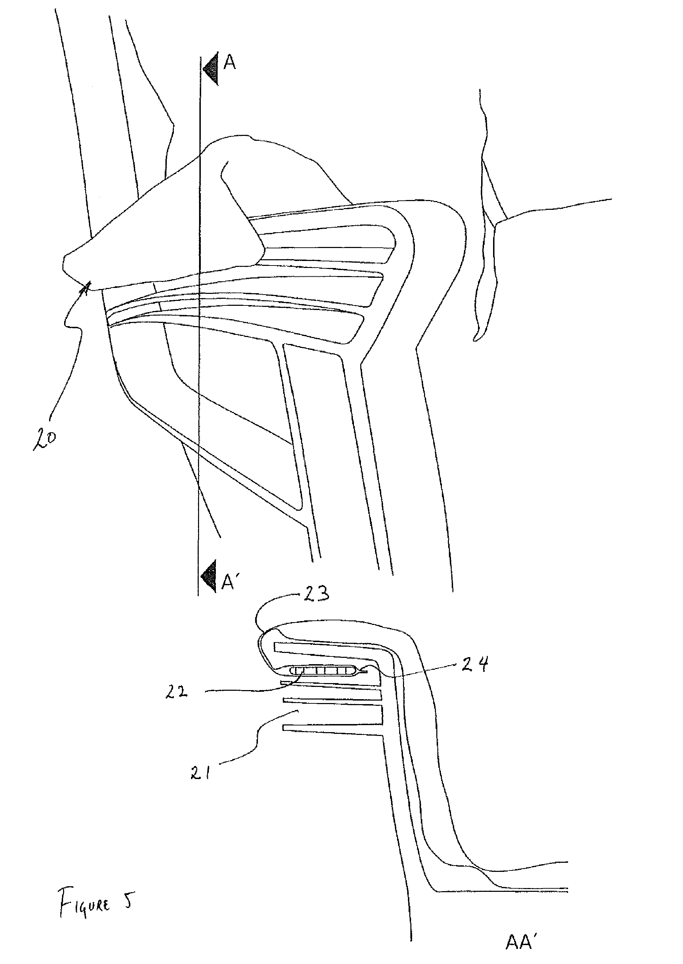

Looking at Fig. 5, a second, or type 2 armrest fixation mechanism 20 is shown. Clearly, if a child seat 1 is not provided with appropriate armrests, this portion of the inflatable upholstery need not be provided, and the type 2 armrest fixation 20 may be dispensed with. Additionally, whilst this type 2 fixation 20 is provided and explained with regard to the armrest 4, it is not limited to its use in this portion of a child seat 1, and could be used in a different portion of the child seat 1 to hold the inflatable upholstery 10 thereto. In the same way as described with the type 1 fixation 30, the type 2 fixation means 20 are intended to generally hold a portion of the inflatable upholstery 10 within the child seat 1, to appropriately form-fit the inflatable upholstery 10 to the child seat 1. It is not intended that the type 2 fixation mechanism 20 provide a fixation of the upholstery 10 to the child seat 1 which has no possibility of play in the relative positioning.

As shown in the cross sectional view of Fig. 5, the type 2 fixation mechanism 20 is provided by means of a stiff strip 22 being held in a flat, preferably unbent, manner in a pocket 24 at the appropriate edge of the inflatable upholstery 10. The stiff strip 22 within the pocket 24 is intended to be held within an elongated slot in the child seat 1. In the present disclosure, the elongated slot 21 is provided on the outer side of the armrest 4 of the child seat 1. In use, the stiff strip 22 is slotted into the elongated slot 21, thus meaning that the inflatable upholstery 10 has a bend 23 from the elongated slot 21 around into the interior of the child seat 1. As will be understood from Fig. 5, this mechanism will appropriately hold the sides of the inflatable upholstery 10 around the armrests 4 of the child seat 1. Preferably, the thickness of the stiff strip 22 in the pocket 24 is similar to that of the elongated slot 21, thus leading to a frictional engagement between the stiff strip 22 and the elongated slot 21. As will be understood, this frictional engagement will improve the interaction, and stop the type 2 fixing mechanism 20 from disengaging the elongated slot 21 of the child seat 1.

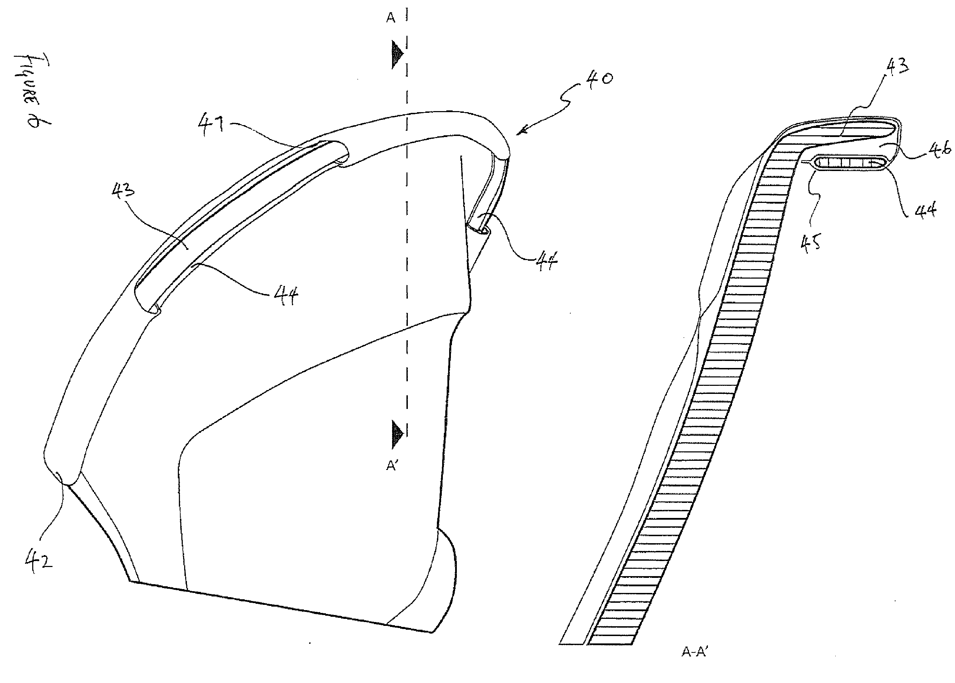

In Fig. 6, a type 3 bent strip fixation mechanism 40 is shown. Again, this type 3 fixation mechanism 40 is shown with regard to fixing the inflatable upholstery 10 to the head support region 5 of the child seat 1. In the example shown, the head support region 5 is generally provided with a large curved portion which will appropriately surround the head of the child. Obviously, if a different structure were to be chosen, either the type 3 fixation mechanism 40 is amended, or the type 2 fixation mechanism could be used to structure and hold the inflatable upholstery 10 in place.

The type 3 fixation mechanism is provided by a series of slip pockets 45 provided at the edge of the inflatable upholstery 10 at the appropriate region - in this case in the region behind the child's head. Held in a translational or slippable manner in the slip pockets 45 is a bendable, but appropriately resilient, strip 44. The strip 44 will be held within the slip pockets 45 in a bent manner, such that an appropriate curve is formed to the upper head region of the inflatable upholstery 10, wherein the curve will properly match with the head portion 5 of the child seat 1. In order to increase the rigidity of the child seat, it is common to provide a lip 43 on the outer edge of the child seat 1 in the head region 5, with this lip 43 following the outer profile of the head portion 5 of the child seat 1. As can be seen in Fig. 6, when the inflatable upholstery 10 is positioned around the head portion 5 of the child seat 1, the bent strip 44 provides a fixation pocket 46, which is essentially a pocket formed from a loop on the edge of the inflatable upholstery 10, wherein this fixation pocket 46 appropriately matches the profile of the lip on the seat 43.

In use, the inflatable upholstery 10 is positioned into the interior of the child seat 1, and the bent strip 44 in the slip pocket 45 is positioned over the lip on the seat 43, such that the lip on the seat 43 is held within the fixation pocket 46. Once again, this will hold the upper portion of the inflatable upholstery 10 in the appropriate region of the child seat 1, such that the inflatable upholstery 10 is form-fit to the child seat 1.

In order to attach the bent strip 44 within the slip pockets 45, the end slip pockets 45 are provided with a closed end 42. The bent strip 44 is thread through the central open ended slip pockets 45, with eventually the first end being positioned within the first of the closed ended slip pockets 45, until the end of the bent strip reaches the closed end 42. The second end of the bent strip 44 can then be placed in the second of the closed ended slip pockets 45, such that the bent strip 44 is properly held and defines the appropriate curved portion in the region of the head portion of the inflatable upholstery 10.

As described above, it is possible to provide the inflatable upholstery with either all three of the fixation methods and mechanisms described in Figs. 4 to 6, or only one, or two of the mechanisms as desired. Further, whilst the type 3 mechanism 40 is described for positioning the inflatable upholstery 10 around the head support region 5 of the child seat 1, if the head support region 5 is of a square profile, the type 2 mechanism could be used instead. Likewise, the type 3 mechanism could be used in any portion of the edge of the inflatable upholstery 10 as required. The use of the tabs 33 of the type 1 mechanism 30, is not limited to the position shown in Fig. 4, but could in fact be used throughout the whole of the inflatable upholstery, to appropriately position this within the interior of the child seat 1.

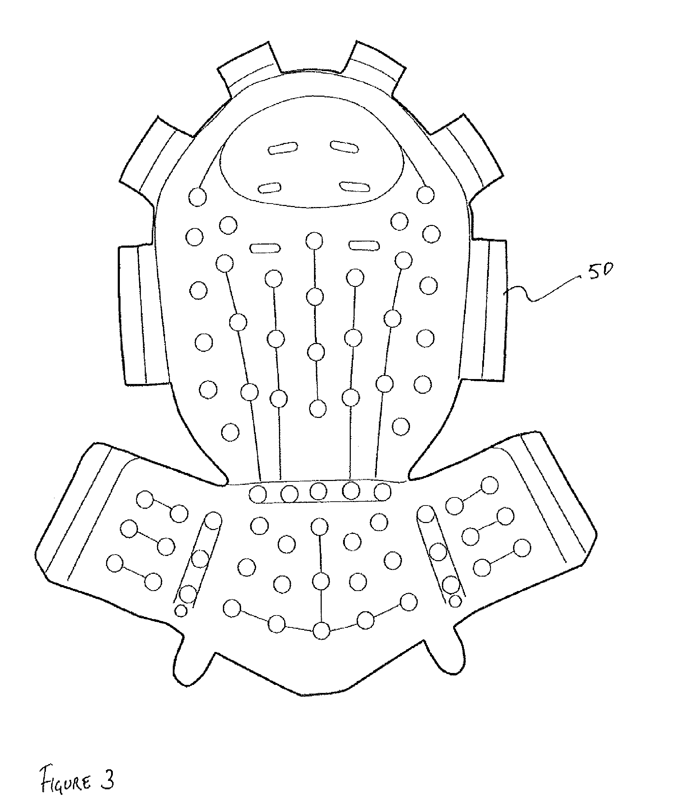

In addition to the above regions for fixing the inflatable upholstery 10 into the child seat 1, Fig. 3 shows that a sidewall location could be provided with a sidewall tab 50. The sidewall tab 50 could either be the end pockets of the type 3 fixing mechanism in the region of the head portion of the child seat 1, or could be type 2 mechanisms which fit within appropriate slots in the side portion of the child seat 1. This sidewall portion would generally be positioned near the shoulders and ribcage of a child within the child seat 1, and would further hold the inflatable upholstery 10 to the child seat 1. Obviously, the use of the sidewall tabs 50 would depend upon the shape of the child seat 1.

## Claims

1. A removeable inflatable upholstery (10) for a child seat (1), in particular a child seat (1) for a bicycle comprising a shell-like support structure comprising:
- a seat portion (2),
- a back rest (3),
- preferably including one or more lateral armrests (4),
and/or
- one or more lateral shoulder supports,
and/or
- one or more lateral head supports (5),
wherein, the inflatable upholstery (10) is a separate part being attachable to the support structure or parts thereof at the user's discretion.

2. The inflatable upholstery (10) according to claim 1, **characterized in that** the inflatable upholstery (10) is made of an impermeable plastic material.

3. The inflatable upholstery (10) according to claim 1 or 2, **characterized in that** the inflatable upholstery (10) is made to two sheets of plastic material which are welded together, so as to form one or more inflatable volumes (12).

4. The inflatable upholstery (10) according to any of the claims 1-3, **characterized in that** the inflatable upholstery (10) comprises at least two inflatable volumes (12) which are separated from each other and which are separately inflatable.

5. The inflatable upholstery (10) according to either claim 3 and/or 4 **characterized in that** the two sheets of plastic material are welded together according to a specific welding pattern so as to form separately inflatable volumes (12) or separately inflatable groups of volumes (12).

6. The inflatable upholstery (10) according to either claim 4 or and/or claim 5 **characterized in that** air valves are associated to each single and/or each group of separate inflatable volumes (12).

7. The inflatable upholstery (10), in particular according to any of the preceding claims, **characterized in that** the inflatable upholstery (10) is attached by means of
- cleat-tabs (33),
and/or
- velcro strips,
and/or
- fastening profiles made of rubber of rubber-like material,
and/or
- strip portions made of stiff (22, 44), but foldable or bendable material, which is preferably plastic.

8. The inflatable upholstery (10) according to any one of the previous claims, wherein certain portions of the inflatable upholstery (10) comprise inflatable volumes (12) which are in parallel, and which are separately inflatable such that the thickness of these portions may be tailored to the user's requirements and the size of a child in the seat (1).

9. The inflatable upholstery (10) of any one of the previous claims, wherein in the head support portion (5) of the inflatable upholstery (10), regions are provided which are sized and shaped to interact with, and preferably hold, a helmet of a child using the seat (1), so as to reduce the lateral motion of the head of the child, wherein
preferably, these helmet support portions are provided by separately inflatable volumes (12) of the upholstery (10).

10. A child seat (1) wherein the seat (1) is provided with flanges and/or recesses and/or slots and/or protrusions so as to appropriately interact with the upholstery (10) of any of the preceding claims, and hold the upholstery (10) to the seat (1),
